Europäisches Patentamt

European Patent Office

Office européen des brevets

(11) Veröffentlichungsnummer: **0 379 103**
**A1**

## (12) EUROPÄISCHE PATENTANMELDUNG

(21) Anmeldenummer: **90100678.3**

(22) Anmeldetag: **13.01.90**

(51) Int. Cl.⁵: **A01C 17/00**

(30) Priorität: **20.01.89 DE 3901523**

(43) Veröffentlichungstag der Anmeldung:
**25.07.90 Patentblatt 90/30**

(84) Benannte Vertragsstaaten:
**DE FR GB**

(71) Anmelder: **Amazonen-Werke H. Dreyer GmbH
& Co. KG
Am Amazonenwerk 9-13
D-4507 Hasbergen-Gaste(DE)**

(72) Erfinder: **Dreyer, Heinz, Dipl.-Ing. Dr.
Am Amazonenwerk 7
D-4507 Hasbergen(DE)**

(54) **Schleuderdüngerstreuer.**

(57) Schleuderstreuer, insbesondere zum Ausbringen von gegernten Düngemitteln, mit einem Vorratsbehälter und einer Verteileinrichtung mit vorzugsweise zwei Schleuderscheiben, denen die auszubringenden Düngemittel über eine Dosiereinrichtung zugeführt werden, wobei zwischen der Dosiereinrichtung und den Schleuderscheiben ein Düngemittelleitelement, beispielsweise Rutsche oder Trichter, angeordnet ist, dessen der Schleuderscheibe zugewandte Seite über einen Hebelmechanismus verstellbar und/oder einstellbar ist. Um bei dem gattungsgemäßen Schleuderdüngerstreuer das Auftreten des Mengeneffektes in einfacher Weise auszuschalten, ist vorgesehen, daß über das Düngemittelleitelement (13) der Aufgabepunkt des Düngers auf der Schleuderscheibe (8) veränderbar ist, und daß durch die Veränderung des Aufgabepunktes des Düngers auf der Schleuderscheibe (8) die Arbeitsbreite des Streuers einstellbar ist, wobei gleichzeitig der bei unterschiedlichen Mengen auftretende Mengeneffekt durch die entsprechende Verstellung des Düngemittelleitelementes (13) zu eleminieren ist.

FIG. 2

## Schleuderdüngerstreuer

Die Erfindung betrifft einen Schleuderdüngerstreuer gemäß des Oberbegriffes des Patentanspruches 1.

Ein derartiger Schleuderdüngerstreuer ist durch die europäische Offenlegungsschrift 01 70 605 bekannt.

Bei diesem Schleuderdüngerstreuer ist zwischen der Dosiereinrichtung und den Schleuderscheiben eine trichterförmige Rutsche angeordnet, die über einen Hebelmechanismus verstellbar ist. Mittels dieser trichterförmigen Rutsche wird der Aufgabepunkt des Düngers auf der Schleuderscheibe bestimmt. Durch Verstellen des Aufgabepunktes, durch Verstellung der Rutsche, läßt sich die Arbeitsbreite, über welche die Düngemittel verteilt werden, einstellen. Nachteilig ist bei dieser Konstruktion, daß der Aufgabepunkt nicht bei Veränderung der Düngermenge bzw. in Abhängigkeit von der Düngermenge verändert wird. Hierdurch ergibt sich, wie Versuche ergeben haben, der sog. Mengeneffekt. D.h., daß bei unterschiedlich großen Streumengen ist der Streusektor unterschiedlich groß bzw. er verschiebt sich in seitlicher Richtung. Hierdurch ergeben sich sehr große Düngeungenauigkeiten.

Der Erfindung liegt nun die Aufgabe zugrunde, bei dem gattungsgemäßen Schleuderdüngerstreuer das Auftreten des Mengeneffektes in einfacher Weise auszuschalten.

Diese Aufgabe wird erfindungsgemäß dadurch gelöst, daß über das Düngermittelleitelement der Aufgabepunkt des Düngers auf der Schleuderscheibe veränderbar ist, und daß durch die Veränderung des Aufgabepunktes des Düngers auf der Schleuderscheibe die Arbeitsbreite des Streuers einstellbar ist, wobei gleichzeitig der bei unterschiedlichen Mengen auftretende Mengeneffekt durch die entsprechende Verstellung des Materialleitelementes zu elliminieren ist. Hierdurch wird in einfachster Weise eine Änderung der Arbeitsbreite ohne des negativen Auftretens des Mengeneffektes bei unterschiedlichen Ausbringmengen erreicht. Bei jeder Ausbringmenge und bei jeder Streubreiteneinstellung wird der Dünger gleichmäßig verteilt.

Durch die deutsche Auslegeschrift 35 11 240 ist ein Düngerstreuer bekannt, bei dem durch Veränderung des Aufgabepunktes automatisch in Abhängigkeit von der Ausbringmenge verändert wird, so daß der Mengeneffekt elliminiert ist. Eine Änderung der Streubreite über eine Veränderung der Aufgabepunkte ist bei diesem Düngerstreuer nicht vorgesehen.

In erfindungsgemäßer Weise ist also vorgesehen, daß das Düngemittelleitelement sowohl in X- als auch in Y-Richtung eines gedachten Koordinatensystems verstellbar ist. Hierbei ist das Düngemittelleitelement in X- und Y-Richtunggetrennt voneinander verstellbar und/oder einstellbar.

Um über das Materialleitelement sowie die Streubreite einstellen zu können als auch den Men-geneffekt bei unterschiedlichen Ausbringmengen eliminieren zu können, ist erfindungegemäß vorgesehen, daß das Materialleitelement mit einer kreuzgelenk- oder kugelgelenkähnlichen Aufhängung am Trichter oder am Rahmen des Schleuderdüngerstreuers befestigt ist.

Weitere Einzelheiten der Erfindung sind der Beispielsbeschreibung und den Zeichnungen zu entnehmen. Hierbei zeigen

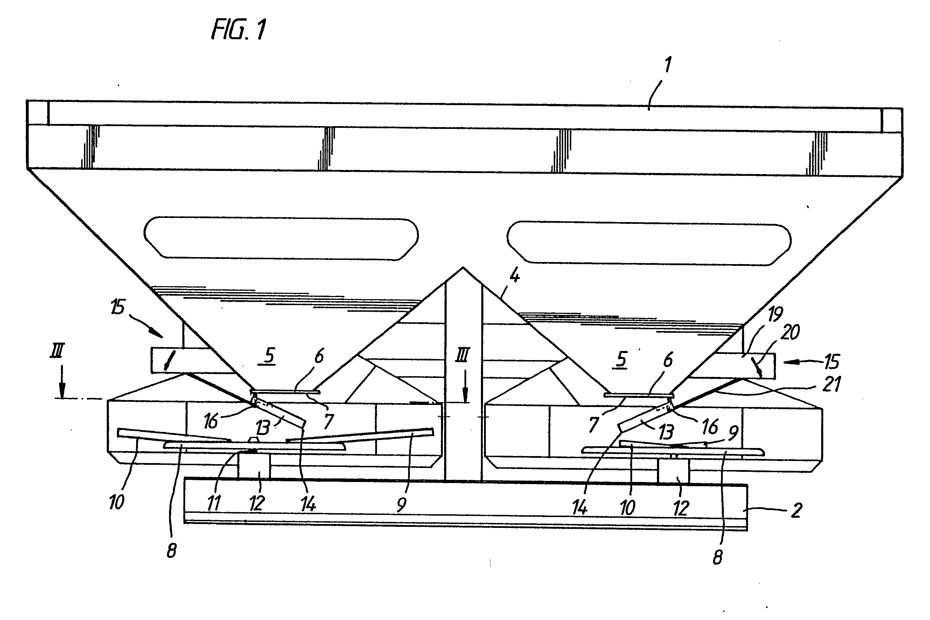

Fig. 1 einen erfindungsgemäßen Schleuderdüngerstreuer in der Ansicht von hinten,

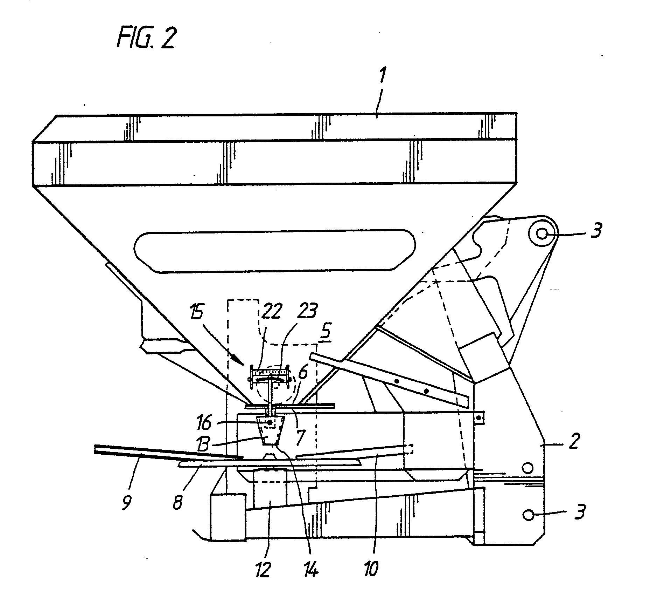

Fig. 2 den Schleuderdüngerstreuer in der Seitenansicht und

Fig. 3 die Anordnung und Verstellung der Rutsche und somit Änderung des Aufgabepunktes in der Ansicht III -III in Prinzipdarstellung.

Der Schleuderdüngerstreuer weist den Vorratsbehälter 1 und den Rahmen 2 auf. Auf der Vorderseite des Rahmens 2 sind die Dreipunktkupplungselemente 3 angeordnet, über welchen der Schleud-erdüngerstreuer an den Dreipunktkraftheber ange-baut werden kann. Der Vorratsbehälter 1 ist in seinem unteren Bereich durch das dachförmige Mittelteil 4 in die beiden Trichterspitzen 5 aufgeteilt. Die Trichterspitzen 5 weisen jeweils den Boden 6 auf, an dem in bekannter und daher nicht näher dargestellter Weise der Dosiermechanismus 7 angeordnet ist. Dieser Dosiermechanismus 7 besteht in bekannter Weise aus der im Behälterboden 6 angeordneten Durchlaßöffnung, welche über einen nicht dargestellten Schieber in ihrer Öffnungsweite einstellbar sowie zu verschließen ist. Unterhalb jedes Dosiermechanismus befindet sich eine Schleuderscheibe 8 mit den Wurfschaufeln 9 und 10. Die Schleuderscheiben 8 sind auf den Getriebeausgangswellen 11 der Getriebe 12 angeordnet. Die Getriebe 12 sind über Wellen in bekannter und daher nicht dargestellter Weise mit einem Zentralgetriebe verbunden, dessen Eingangswelle über eine Gelenkwelle von der Schlepperzapfwelle oder einem Ölmotor antreibbar ist. Hierdurch werden die Schleuderscheiben 8 während des Betriebes in gegenläufige Rotation versetzt.

Zwischen der Dosiereinrichtung 7 und den Schleuderscheiben 8 ist jeweils eine Rutsche 13 angeordnet. Diese Rutsche 13 ist als Düngerleitelement ausgebildet. Die der Schleuderscheibe 8 zu-gewandte Seite 14 der Rutsche 13 ist über den Hebelmechanismus 15 verstellbar, so daß die Rutsche 13 einstellbar ist.

Die Rutsche 13 ist über eine kreuzgelenk- oder kugelgelenkähnliche Aufhängung 16 am Trichter 5 des Schleuderdüngerstreuers befestigt.

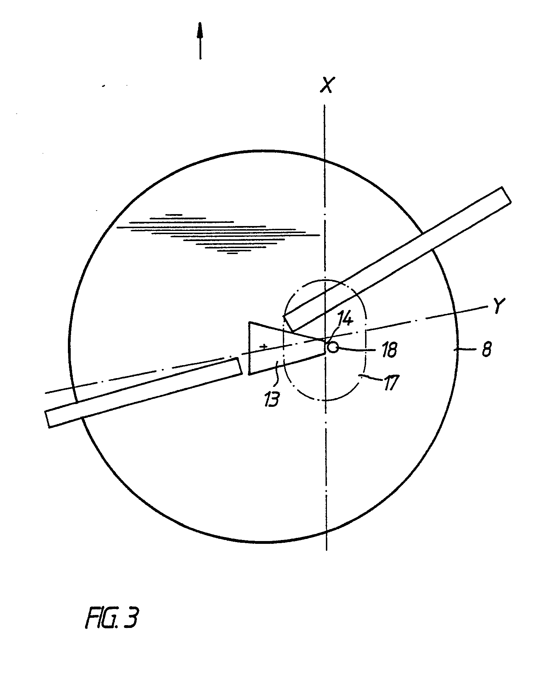

Der Hebel und Einstellmechanismus 15 ist derart ausgebildet, daß über die kugelgelenk- oder kreuzgelenkähnliche Aufhängung 16 das Ablaufende 14 der Rutsche 13 in X- und Y-Richtung eines gedruckten Koordinatensystems getrennt verstellbar ist und einstellbar ist. D.h. also, daß das Ablaufende 14 der Rutsche 13 in einem gewissen Bereich 17, wie er in Fig. 3 mit strichpunktierten Linien eingezeichnet ist, jeder beliebige Punkt einstellbar ist. Durch das Ablaufende 14 der Rutsche 13 wird jeweils der Aufgabepunkt 18 des Düngers auf der Schleuderscheibe 8 eingestellt. Insbesondere durch Veränderung des Aufgabepunktes 18 durch Verstellung des Ablaufendes 14 der Rutsche 13 in X-Richtung wird die Arbeitsbreite des Streuers eingestellt. Gleichzeitig läßt sich durch Veränderung des Aufgabepunktes in Y-Richtung bei unterschiedlichen Mengen der auftretende Mengeneffekt durch entsprechende Verstellung des Ablaufendes 14 der Rutsche 13 eliminieren.

Der Hebelmechanismus 15 ist derart aufgebaut, daß durch die in den Haltern 19 angeordneten Langlöcher 20 das Ablaufende 14 und somit der Aufgabepunkt 18 in Y-Richtung verstellt werden kann. Gleichzeitig kann der Hebel 21 an dem zwischen den Haltern 19 befestigten Stück 22 innerhalb des Langloches 23 in X-Richtung verstellt werden. Über Feststellelemente, wie beispielsweise Schrauben und Muttern oder Knebelmechanismen läßt sich in einfacher Weise eine Feststellung der Rutsche 13 erreichen.

**Ansprüche**

1. Schleuderstreuer, insbesondere zum Ausbringen von gegernten Düngemitteln, mit einem Vorratsbehälter und einer Verteileinrichtung mit vorzugsweise zwei Schleuderscheiben, denen die auszubringenden Düngemittel über eine Dosiereinrichtung zugeführt werden, wobei zwischen der Dosiereinrichtung und den Schleuderscheiben ein Düngemittelleitelement, beispielsweise Rutsche oder Trichter, angeordnet ist, dessen der Schleuderscheibe zugewandte Seite über einen Hebelmechanismus verstellbar und/oder einstellbar ist, dadurch gekennzeichnet, daß über das Düngemittelleitelement (13) der Aufgabepunkt des Düngers auf der Schleuderscheibe (8) veränderbar ist, und daß durch die Veränderung des Aufgabepunktes des Düngers auf der Schleuderscheibe (8) die Arbeitsbreite des Streuers einstellbar ist, wobei gleichzeitig der bei unterschiedlichen Mengen auftretende Mengeneffekt durch die entsprechende Verstellung des Düngemittelleitelementes (13) zu eliminieren

ist.

2. Schleuderstreuer, insbesondere zum Ausbringen von gekörnten Düngemitteln, mit einem Vorratsbehälter und einer Verteileinrichtung mit vorzugsweise zwei Schleuderscheiben, denen die auszubringenden Düngemittel über eine Dosiereinrichtung zugeführt werden, wobei zwischen der Dosiereinrichtung und den Schleuderscheiben ein Düngemittelleitelement, beispielsweise Rutsche (13) oder Trichter, angeordnet ist, dessen der Schleuderscheibe (8) zugewandte Seite (14) über einen Hebelmechanismus (15) verstellbar und/oder einstellbar ist, insbesondere nach Anspruch 1, dadurch gekennzeichnet, daß das Düngemittelleitelement (13) sowohl in X- wie auch in Y-Richtung eines gedachten Koordinatensystems verstellbar ist.

3. Schleuderstreuer nach Anspruch 1 und 2, dadurch gekennzeichnet, daß das Düngemittelleitelement (13) in X- und Y- Richtung getrennt verstellbar und/oder einstellbar ist.

4. Schleuderstreuer nach einem oder mehreren der vorstehen Ansprüche, dadurch gekennzeichnet, daß das Düngemittelleitelement (13) mit einer kreuzgelenkähnlichen oder kugelgelenkähnlichen Aufhängung (16) am Trichter (1) oder am Rahmen (2) des Schleuderstreuers befestigt ist.

FIG. 1

EP 0 379 103 A1

FIG. 2

FIG. 3

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-U-8807900 (KUXMAN) <br> * Seite 8, Absatz 3 * <br> * Seite 10, Absatz 2; Figur 1 * <br> --- | 1, 2 | A01C17/00 |
| X | FR-A-621096 (LEFEVRE) <br> * das ganze Dokument * <br> ----- | 1, 2 | |

RECHERCHIERTE
SACHGEBIETE (Int. Cl.5 )

A01C

Der vorliegende Recherchenbericht wurde für alle Patentansprüche erstellt

| Recherchenort | Abschlußdatum der Recherche | Prüfer |
|---|---|---|
| DEN HAAG | 19 APRIL 1990 | HERYGERS J.J. |